# EUROPÄISCHE PATENTSCHRIFT

(11) **EP 3 275 071 B1**
(45) Veröffentlichungstag und Bekanntmachung des Hinweises auf die Patenterteilung: **04.09.2019**
(21) Anmeldenummer: 16702416.5
(22) Anmeldetag: 01.02.2016
(51) Int. Cl.: H02K 5/02, H02K 5/20, H02K 5/08, H02K 15/14

(54) **FLUIDGEKÜHLTER GEHÄUSEMANTEL FÜR EINE ELEKTRISCHE MASCHINE**
FLUID-COOLED HOUSING JACKET FOR AN ELECTRICAL MACHINE
CHEMISE DE CARTER REFROIDIE PAR UN FLUIDE POUR UN MOTEUR ÉLECTRIQUE

(30) Priorität: 27.03.2015 DE 102015205591
(43) Veröffentlichungstag der Anmeldung: 31.01.2018
(73) Patentinhaber: Robert Bosch GmbH, 70442 Stuttgart (DE)
(72) Erfinder: GEISE, Stephan, 59602 Ruethen (DE)
(86) Internationale Anmeldenummer: PCT/EP2016/052050
(87) Internationale Veröffentlichungsnummer: WO 2016/155911

(56) Entgegenhaltungen:
- EP-A1- 1 404 006
- EP-A1- 2 040 354
- EP-A2- 2 710 708
- WO-A1-2014/158260
- WO-A2-2005/114782
- DE-A1- 3 501 269

## Beschreibung

### Gebiet der Erfindung

Die Erfindung betrifft einen Gehäusemantel mit Fluidkühlung für eine elektrische Maschine, sowie eine elektrische Maschine mit einem fluidgekühlten Gehäusemantel.

### Stand der Technik

In aktuellen Kraftfahrzeugen mit elektrischen Antriebseinheiten werden elektrische Maschinen häufig mit einem Metallgussgehäuse und/oder einer Kombination Metallgussgehäuse und Kunststoffbauteilen unterhalb des Fahrzeugs freiliegend verbaut. Das Gehäuse der elektrischen Maschinen kann dabei die Antriebseinheit verbinden, die elektrische Maschine vor äußeren Einflüssen schützen und die elektrische Maschine über das Metallgussgehäuse abschirmen, um eine elektromagnetische Verträglichkeit der Antriebseinheit zu steigern.

Derartige Gussgehäuse können ein erhebliches Gewicht aufweisen und müssen in der Regel für eine Montage in einem zusätzlichen Prozessschritt mechanisch zerspant werden. Für den Zerspanungsprozess können Bearbeitungszentren erforderlich sein, die beispielsweise Anschraubflächen und/oder Anschraubbohrungen des Gehäuses exakt zueinander ausrichten.

Ferner können bei einem Gießprozess für das Gehäuse Lunker entstehen, die zum einen eine Festigkeit des Gehäuses schwächen und zum anderen beim Zerspanen offengelegt werden können. Dies kann abgesehen von einem negativen optischen Eindruck zu einer verstärkten Korrosion führen.

Ferner werden aufgrund gesteigerter Leistungsanforderungen an die elektrischen Maschinen häufig Kühlvorrichtungen in das Gehäuse der elektrischen Maschine integriert, sodass das Gehäuse die Kühlungsfunktion übernehmen kann. Derartige Gehäuse können daher insgesamt komplex aufgebaut sein und ein entsprechender Herstellungsprozess kann kostenintensiv sein.

Die DE 10 2010 008 584 A1 beschreibt eine Antriebseinheit mit einem doppelwandigen Gehäuse, wobei eine mit Trennstegen bestückte Metallmantelfläche von einem Kunststoffgehäuse umgeben ist, so dass zwischen der Metallmantelfläche und dem Kunststoffgehäuse ein Kühlkanal ausgebildet ist. Die DE 196 24 519 A1 beschreibt eine elektrische Maschine mit einem doppelwandigen Gehäuse, welches aus einem Gehäuseinnenteil und einem dieses ummantelnden Gehäuseaußenteil besteht, wobei das Gehäuseinnenteil ein System von mäanderförmig verlaufenden Kühlkanälen aufweist.

Die EP 1 404 006 A1 beschreibt eine elektrische Maschine mit einem topfförmigen Kunststoffgehäuse, welches einen Kühlkanal aufweist.

Die DE 35 01 269 A1 beschreibt eine elektrische Maschine mit einem Kunststoffgehäuse, welches mit einer Einlage aus einem Flächenstoff versehen ist.

### Offenbarung der Erfindung

### Vorteile der Erfindung

Ausführungsformen der vorliegenden Erfindung können in vorteilhafter Weise ermöglichen, einen robusten, leichten und kostengünstig herstellbaren Gehäusemantel für eine elektrische Maschine bereitzustellen.

Gemäß einem ersten Aspekt der Erfindung wird ein Gehäusemantel für eine elektrische Maschine vorgeschlagen. Der Gehäusemantel ist im Wesentlichen topfförmig und im Wesentlichen aus Kunststoff ausgebildet. An einem Außenumfang des Gehäusemantels ist ferner wenigstens ein Kühlkanal zur Fluidkühlung der elektrischen Maschine in dem Gehäusemantel ausgebildet. Der erfindungsgemäße Gehäusemantel zeichnet sich insbesondere dadurch aus, dass zwischen einer Innenfläche des Gehäusemantels und dem Kühlkanal eine Gewebelage in den Gehäusemantel integriert und/oder eingebettet ist, welche den Gehäusemantel durchzieht. Die Gewebelage kann den Gehäusemantel dabei insbesondere in Umfangsrichtung des Gehäusemantels zumindest teilweise durchziehen.

Im Allgemeinen kann der Gehäusemantel ein Gehäuse für eine elektrische Maschine bezeichnen, welches dazu ausgeführt ist, die elektrische Maschine in einem Innenbereich des Gehäuses aufzunehmen und zumindest teilweise zu ummanteln, so dass die elektrische Maschine vor äußeren Einflüssen geschützt sein kann, wobei von der elektrischen Maschine generierte Wärme über den Gehäusemantel und den darin ausgebildeten Kühlkanal effizient abgeführt werden kann.

Der Gehäusemantel mit darin integrierter Gewebelage und darin ausgebildetem bzw. darin integriertem Kühlkanal kann einstückig ausgestaltet sein, was sich insbesondere vorteilhaft auf eine mechanische Stabilität des Gehäusemantels auswirken kann. Durch den erfindungsgemäßen Gehäusemantel kann ein kostengünstig herstellbares Kunststoffgehäuse für eine elektrische Antriebseinheit bereitgestellt werden, das beispielsweise im Vergleich zu einem Metallgussgehäuse und/oder einem mehrkomponentigen Gehäuse mit geringerer Masse bzw. leichter ausgeführt sein kann. Der Gehäusemantel kann etwa in einem Spritzgießverfahren hergestellt sein, wobei dieser nicht nachträglich mechanisch bearbeitet, z.B. zerspant, werden muss. Dies kann sich vorteilhaft auf Produktionskosten durch Einsparung wenigstens eines Produktionsschrittes auswirken.

Der Kühlkanal kann vollständig und/oder ausschließlich etwa in einer Wandung und/oder einem Außenbereich des Gehäusemantels ausgebildet sein, wobei eine Wandung des Kühlkanals durch den Gehäusemantel selbst bereitgestellt sein kann. Dadurch kann auf zusätzliche Dichtelemente zur Abdichtung des Kühlkanals verzichtet werden und es kann eine umfassende Kühlung für die elektrische Maschine ohne Leckagen bereitgestellt werden.

Ein weiterer Aspekt der Erfindung betrifft eine elektrische Maschine mit einem Gehäusemantel, so wie obenstehend und untenstehend beschrieben.

Gemäß einer Ausführungsform der Erfindung ist die Gewebelage zumindest teilweise von dem Kunststoff des Gehäusemantels umspritzt. Die Gewebelage kann so ein von Kunststoff umspritztes und/oder durchtränktes Geflecht bzw. Gewebe analog einem Organoblech bilden, welches die mechanische Stabilität des Gehäusemantels in vorteilhafter Weise steigern kann.

Gemäß einer Ausführungsform der Erfindung weist die Gewebelage ein Metallgewebe, ein Kohlefasergewebe und/oder ein Glasfasergewebe auf. Alle derartigen Gewebe können die Robustheit und/oder mechanische Stabilität des Gehäusemantels steigern. Ferner kann mithilfe des Metallgewebes eine in dem Gehäusemantel aufgenommene elektrische Maschine vorteilhaft elektromagnetisch abgeschirmt sein, so dass beispielsweise eine Störung und/oder Verzerrung eines magnetischen Antriebsfelds der elektrischen Maschine durch externe magnetische und/oder elektromagnetische Felder vermieden werden kann. Derart kann die elektromagnetische Verträglichkeit (EMV) einer Antriebseinheit, welche den Gehäusemantel und die elektrische Maschine aufweisen kann, gesteigert sein bzw. kann der Gehäusemantel einen EMV-Schutz bereitstellen. Das Metallgewebe kann beispielsweise Kupfer, Stahl und/oder Aluminium aufweisen. Aufgrund einer hohen Wärmeleitfähigkeit des Metallgewebes kann ferner ein Wärmeübertrag von der elektrischen Maschine zu dem Kühlkanal erhöht und insgesamt die Kühlung verbessert sein.

Gemäß einer Ausführungsform der Erfindung ist der Kunststoff ein faserverstärkter Kunststoff. Beispielsweise kann der Kunststoff ein faserverstärkter thermoplastischer Kunststoff sein und/oder z.B. Polyamid, Polybuthylenterephthalat und/oder Polypropylen aufweisen. Der Kunststoff kann insbesondere zur Steigerung einer Zugfestigkeit des Kunststoffes etwa mit Glasfasern und/oder Mineralpartikeln versetzt sein.

Gemäß einer Ausführungsform der Erfindung ist eine Maschenweite der Gewebelage kleiner als 5,0 mm und/oder eine Dicke der Gewebelage beträgt wenigstens 0,3 mm. Zum einen kann so eine Robustheit des Gehäusemantels erhöht sein und zum anderen kann sichergestellt sein, dass die Maschen der Gewebelage während der Produktion vollständig von dem Kunststoff umflossen werden und/oder eingeschlossen werden können. Der Gehäusemantel kann so eine Art von Organoblechgehäuse mit hoher Stabilität bereitstellen.

Gemäß einer Ausführungsform der Erfindung ist der Kühlkanal in dem Gehäusemantel spiralförmig entlang eines Außenumfangs des Gehäusemantels umlaufend ausgebildet. Der Kühlkanal kann so die elektrische Maschine spiralförmig umlaufen, so dass eine effiziente und umfassende Kühlung bereitgestellt werden kann. Der Kühlkanal kann von einem Kühlfluid, z.B. Wasser und/oder einem anderen Kühlmittel durchströmt sein. Dazu kann an einer ersten Stirnseite bzw. Stirnfläche des Gehäusemantels ein Einlass zum Einbringen von Kühlfluid in den Kühlkanal angeordnet sein, und an einer zweiten Stirnseite bzw. Stirnfläche des Gehäusemantels kann ein Auslass zum Abführen von Kühlfluid aus dem Kühlkanal angeordnet sein. Der Einlass und/oder der Auslass können jeweils z.B. mit einer Anschraubhülse und/oder Verschlusshülse ausgestattet sein, welche zum Anschluss an weitere Komponenten eines Kühlkreislaufs, z.B. einen Schlauch und/oder ein Leitungsrohr, ausgebildet sein können.

Die umlaufende Rohrform des Kühlkanals kann ferner den Gehäusemantel zusätzlich mechanisch stabilisieren und ein Kühlfluid in dem Kühlkanal kann Wärme aus dem Inneren des Gehäusemantels auch bei äußeren Temperaturerhöhungen ohne Leckagen optimal ableiten.

Gemäß der Erfindung ist an einer Stirnfläche des Gehäusemantels ein Flansch ausgebildet, in welchen entlang eines Umfangs eine Mehrzahl von Befestigungsausnehmungen zum Befestigen des Gehäusemantels, beispielsweise an einem Getriebe und/oder einer Karosserie eines Kraftfahrzeugs, ausgebildet ist. Der Flansch kann dabei durch den Gehäusemantel selbst bereitgestellt sein bzw. kann der Flansch einstückig mit dem Gehäusemantel ausgebildet sein, so dass der Gehäusemantel stabil befestigbar und/oder anbringbar sein kann.

Gemäß der Erfindung erstreckt sich die Gewebelage radial zumindest teilweise durch den Flansch, wobei sich die Befestigungsausnehmungen in axialer Richtung des Gehäusemantels durch die Gewebelage erstrecken. Ferner können Befestigungsmittel, wie z.B. Gewindehülsen, in den Befestigungsausnehmungen angeordnet und/oder aufgenommen sein, welche eine Befestigung des Gehäusemantels, z.B. mittels Verschraubung, etwa an der Karosserie ermöglichen können. Auch kann die elektrische Maschine über den Flansch und/oder die Befestigungsausnehmungen an dem Gehäusemantel befestigt sein.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1A zeigt eine Draufsicht auf einen Gehäusemantel mit einer elektrischen Maschine gemäß einer Ausführungsform der Erfindung.
Fig. 1B zeigt eine Schnittbild des Gehäusemantels aus Fig. 1A.
Fig. 2 illustriert Schritte eines Verfahrens zum Herstellen eines Gehäusemantels für eine elektrische Maschine gemäß einer Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

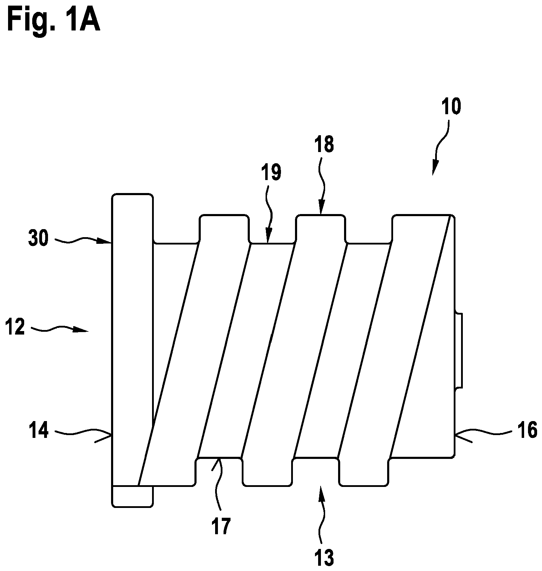

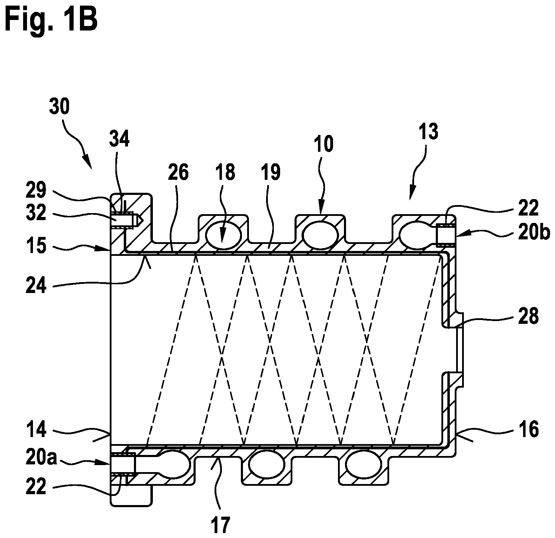

Fig. 1A zeigt eine Draufsicht auf einen Gehäusemantel 10 mit einer elektrischen Maschine 12 gemäß einer Ausführungsform der Erfindung. Fig. 1B zeigt eine Schnittbild des Gehäusemantels 10 aus Fig. 1A ohne elektrische Maschine 12.

Der Gehäusemantel 10 ist im Wesentlichen aus Kunststoff ausgestaltet, so dass eine elektrische Maschine 12 zumindest teilweise von dem Gehäusemantel 10 ummantelt und/oder umschlossen sein kann. Die elektrische Maschine 12 kann dabei einen Motor oder einen Generator bezeichnen. Die elektrische Maschine 12 kann beispielsweise einen Stator und einen relativ zum Stator drehbar gelagerten Rotor aufweisen. Im Schnittbild der Fig. 1B ist der Übersichtlichkeit halber die elektrische Maschine 12 nicht dargestellt.

Der Gehäusemantel 10 kann im Wesentlichen aus Kunststoff spritzgegossen sein. Vorzugsweise kann der Gehäusemantel 10 insbesondere zur Erhöhung einer mechanischen Stabilität und/oder einer Zugfestigkeit aus faserverstärktem Kunststoff hergestellt sein. Beispielsweise kann der Gehäusemantel aus faserverstärktem thermoplastischem Kunststoff, wie etwa Polyamid, Polybutylenterephthalat und/oder Polypropylen, gefertigt sein, welcher etwa mit Glasfasern, Karbonfasern und/oder Mineralpartikeln versetzt sein kann.

Der Gehäusemantel 10 ist im Wesentlichen topfförmig ausgestaltet und weist einen hohlzylindrischen, spritzgegossenen Grundkörper 13 auf, welcher zu einer ersten Stirnfläche 14 hin offen und an einer zweiten Stirnfläche 16 geschlossen ausgestaltet ist.

An einem Außenumfang 15 des Gehäusemantels 10 und/oder des Grundkörpers 13 weist der Gehäusemantel 10 einen Kühlkanal 18 zur Fluidkühlung des Gehäusemantels 10 und/oder der elektrischen Maschine 12 auf. Der Kühlkanal 18 ist als kanalartige, rohrförmige Verdickung einer Mantelfläche 17 des Gehäusemantels 10 und/oder einer Wandung 19 des Gehäusemantels 10 ausgebildet. Der Kühlkanal 18 ist somit in der Wandung 19 integriert bzw. ist der Kühlkanal 18 einstückig mit dem Gehäusemantel 10 ausgestaltet.

Der Kühlkanal 18 umläuft den Grundkörper 13 und/oder den Gehäusemantel 10 spiralförmig entlang des Außenumfangs 15. Über eine Gesamtlänge des Gehäusemantels 10 in axialer Richtung umläuft der in Fig. 1A und 1B gezeigte Kühlkanal 18 den Grundkörper 13 mit insgesamt drei Windungen. Der Kühlkanal 18 kann den Grundkörper 13 jedoch auch mit nur einer Windung oder mit mehr als drei Windungen umlaufen. Die spiralförmige Ausgestaltung des Kühlkanals 18 kann zum einen eine effiziente und umfassende Kühlung des Gehäusemantels 10 bereitstellen und zum anderen kann der Gehäusemantel 10 durch den Kühlkanal 18 und dessen Ausgestaltung als Verdickung der Wandung 19 mechanisch stabilisiert sein. Mit anderen Worten kann die umlaufende Rohrform des Kühlkanals 18 den Gehäusemantel 10 mechanisch stabilisieren und ein Kühlfluid in dem Kühlkanal 18 kann Wärme aus dem Inneren des Gehäusemantels 10 auch bei äußeren Temperaturerhöhungen ohne Leckagen optimal ableiten.

Ein Querschnitt des Kühlkanals 18 kann oval, elliptisch, rund, polygonartig, dreieckig, viereckig oder beliebig anders ausgestaltet sein. Der Kühlkanal 18 ist dazu ausgelegt, von einem Kühlfluid durchströmt zu werden und z.B. von der elektrischen Maschine 12 generierte Wärme abzuführen. Dazu weist der Gehäusemantel 10 an der ersten Stirnfläche 14 eine erste Schnittstelle 20a und an der zweiten Stirnfläche 16 eine zweite Schnittstelle 20b auf, welche jeweils als Einlass zum Einbringen von Kühlfluid in den Kühlkanal 18 oder als Auslass zum Abführen von Kühlfluid aus dem Kühlkanal 18 dienen können. Es kann etwa wenigstens eine Pumpenvorrichtung mittels Verbindungselementen, wie z.B. einem Schlauch und/oder einem Rohr, an wenigstens einer der Schnittstellen 20a, 20b angeschlossen sein, so dass durch die Pumpenvorrichtung Kühlfluid durch den Kühlkanal 18 gefördert werden kann. Um eine leckagefreie, dichte und sichere Verbindung der Schnittstellen 20a, 20b z.B. mit einem Schlauch sicherstellen zu können, kann in jeder der Schnittstellen 20a, 20b eine Anschraubhülse 22 und/oder eine Verschlusshülse 22 angeordnet sein, mit Hilfe derer etwa der Schlauch an die jeweilige Schnittstelle 20a, 20b dichtend angeschraubt werden kann. Andersartige Verbindungen, wie etwa eine Steckverbindung und/oder eine Klemmverbindung, sind ebenfalls möglich.

Weiter weist der Gehäusemantel 10 eine Gewebelage 26 auf, welche zwischen einer Innenfläche 24 des Gehäusemantels 10 und dem Kühlkanal 18 angeordnet ist. Die Gewebelage 26 ist in den Gehäusemantel 10 eingebettet und/oder integriert. Die Gewebelage 26 durchzieht den Gehäusemantel 10 dabei entlang eines Umfangs des Gehäusemantels 10 und ist zumindest teilweise, vorzugsweise jedoch vollständig, von dem Kunststoff des Gehäusemantels 10 umspritzt. Die Gewebelage 26 kann beispielsweise zylinderförmig und/oder topfförmig ausgestaltet sein. Die Gewebelage 26 kann etwa als geschlossene oder zumindest teilweise offene Gewebestruktur ausgestaltet sein. Die Gewebelage 26 kann eine oder mehrere Ausstanzungen und/oder Aussparungen 28 aufweisen, welche beispielsweise herstellungsbedingt und/oder als Art Platzhalter für weitere Elemente des Gehäusemantels 10 vorgesehen sein können, z.B. zum Aufnehmen einer Welle der elektrischen Maschine. Beispielsweise ist die in Fig. 1B gezeigte Gewebelage 26 im Wesentlichen topfförmig ausgestaltet und durchzieht den zylindrischen Grundkörper 13 in Umfangsrichtung des Gehäusemantels 10 vollständig, wobei die Gewebelage 26 zumindest teilweise auch an der zweiten Stirnfläche 16 vorgesehen bzw. ausgebildet ist und im Bereich einer Symmetrieachse des Gehäusemantels 10 eine Aussparung 28 an der zweiten Stirnfläche 26 aufweist.

Die Gewebelage 26 kann beispielsweise Kohlefasern, Glasfasern und/oder Metallfasern umfassen. Durch die Gewebelage 26 kann in vorteilhafter Weise eine mechanische Stabilität des Gehäusemantels 10 erhöht sein. Bei Verwendung von Metallfasern, wie etwa Aluminium-, Stahl und/oder Kupferfasern, kann die Gewebelage 26 ferner zur Abschirmung elektromagnetischer Strahlung dienen. Auch kann insbesondere bei Verwendung von Metallfasern eine Wärmeleitung von der Innenfläche 24 zum Kühlkanal 18 aufgrund einer Wärmeleitfähigkeit der Metallfasern in vorteilhafter Weise erhöht sein.

Die Gewebelage 26 weist eine Dicke von wenigstens 0,3 mm und vorzugsweise wenigstens 0,5 mm auf. Weiter weist die Gewebelage 26 eine Maschenweite kleiner 5,0 mm und vorzugsweise kleiner 3,0 mm auf, so dass sichergestellt sein, dass Maschen der Gewebelage 26 während einer Fertigung des Gehäusemantels 10 vollständig von Kunststoff umspritzt werden können.

Weiter weist der Gehäusemantel 10 an der ersten Stirnfläche 14 eine Flansch 30 auf, welcher durch die Wandung 19 des Gehäusemantels 10 ausgebildet ist. Der Flansch 30 umläuft den Grundkörper 13 dabei im Bereich der ersten Stirnfläche 14 vollständig in Umfangsrichtung des Gehäusemantels 10. Der Flansch 30 kann etwa dazu vorgesehen sein, den Gehäusemantel 10 an einer Karosserie eines Kraftfahrzeugs zu befestigen. Dazu ist in dem Flansch 30 entlang eines Umfangs eine Mehrzahl von Befestigungsausnehmungen 32 vorgesehen, welche sich in axialer Richtung von der ersten Stirnfläche 14 her zumindest teilweise in den Flansch 30 erstrecken. In den Befestigungsausnehmungen 32 kann jeweils eine Gewindehülse 34 angeordnet und/oder aufgenommen sein, mit Hilfe derer der Gehäusemantel 10 mit einem weiteren Element, beispielsweise einer Karosserie, verschraubt werden kann. Die Gewebelage 26 erstreckt sich dabei in radialer Richtung des Gehäusemantels 10 zumindest teilweise durch den Flansch 30, wobei die Befestigungsausnehmungen 32 und/oder die Gewindehülsen sich durch entsprechende Ausstanzungen bzw. Aussparungen 29 in der Gewebelage 26 durch diese erstrecken können.

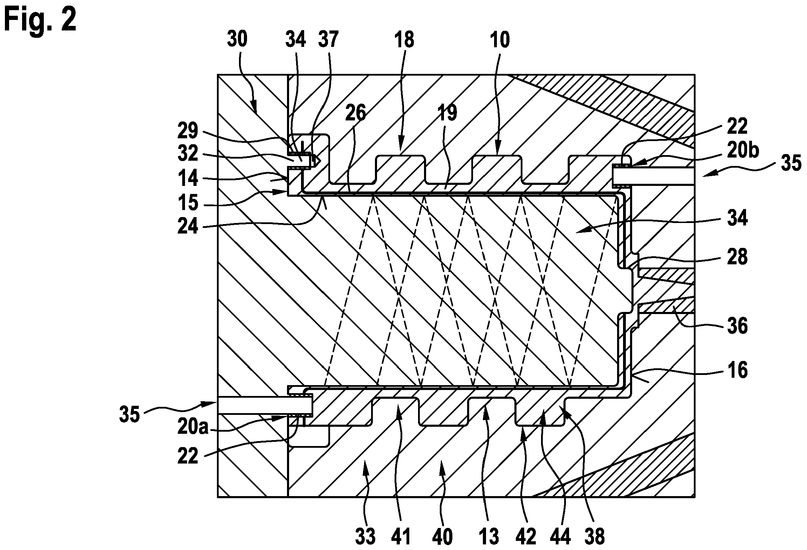

Fig. 2 illustriert Schritte eines Verfahrens zum Herstellen eines Gehäusemantels 10 für eine elektrische Maschine 12 gemäß einer Ausführungsform der Erfindung. Sofern nicht anders beschrieben, kann der in Fig. 2 gezeigte Gehäusemantel 10 dieselben Merkmale und Elemente aufweisen wie der Gehäusemantel 10 der Fig. 1A und 1B.

Zur Herstellung des Gehäusemantels 10 kann etwa eine Spritzgießmaschine, ein Spritzgießwerkzeug 33, gegebenenfalls mit Anschlüssen 35 für eine Medieninjektion, und/oder eine Mediuminjektionsanlage verwendet werden.

In einem vorgezogenen Prozessschritt kann, z.B. in einem Tiefziehwerkzeug, die Gewebelage 26, welche bei dem in Fig. 2 gezeigten Ausführungsbeispiel Metallfasern aufweist, in eine gewünschte Form gebracht werden. Dabei können auch die Aussparungen 29 für die Befestigungsausnehmungen 32 und/oder die Aussparung 28 in die Gewebelage 26 eingebracht werden, z.B. durch Ausstanzen der Aussparungen 28, 29 mit einem Stanzwerkzeug. Mit anderen Worten kann das Verfahren ein Tiefziehen und/oder Formen der Gewebelage 26 sowie ein Einbringen von Aussparungen 28, 29 in die Gewebelage 26 umfassen.

Die Gewebelage 26 wird anschließend auf einen im Wesentlichen zylinderförmigen Formkern 34 im Spritzgießwerkzeug 33 angeordnet und/oder gesteckt. Die Gewebelage 26 kann dabei über die Aussparungen 29 beispielsweise auf Domen 37 fixiert werden, wobei zumindest auf einen Teil der Dome 37 die Gewindehülsen 34 für eine spätere Verschraubung des Gehäusemantels 10 platziert bzw. angeordnet werden können.

In einem nächsten Schritt wird der Kunststoff, welcher etwa ein faserverstärkter thermoplastischer Kunststoff sein kann, über eine Angussbuchse 36 in eine Kavität 38 eingespritzt. Der Kunststoff kann dabei in fließfähiger und erhitzter Form gegebenenfalls unter Druck eingespritzt werden. Die Kavität 38 kann dabei zwischen dem Formkern 34 und einem Außenteil 40 des Spritzgießwerkzeugs 33 gebildet sein, wobei eine geometrische Form der Kavität 38 im Wesentlichen der Form des Gehäusemantels 10 entsprechen kann. Insbesondere weist das Außenteil 40 Vertiefungen 41 auf, welche den Formkern 38 spiralförmig umlaufen und zur Ausbildung des Kühlkanals 18 vorgesehen sind. Die Vertiefungen 41 stellen so einen Außenbereich 42 der Kavität 38 bereit, wobei der Außenbereich 42 den Formkern 34 spiralförmig umläuft.

Um den Kunststoff während des Ausspritzens der Kavität 38 auf Temperatur zu halten, kann die Kavität 38 temperiert bzw. erhitzt sein, etwa durch Erwärmen des Formkerns 34 und/oder des Außenteils 40. Während des Ein- bzw. Ausspritzens der Kavität 38 umfließt der Kunststoff die Maschen der Gewebelage 26 und schließt diese ein. So entsteht eine Art Organoblechgehäuse, das eine hohe Stabilität aufweisen kann.

Je nach gewünschter Wandstärke des Kühlkanals 18, wird direkt anschließend an das Einspritzen des Kunststoffs oder nach einer gewissen Aushärtezeit, welche wenige Sekunden bis rund eine Minute betragen kann, ein Fluid und/oder ein Projektil über die Anschlüsse 35 in den Außenbereich 42 der Kavität 38 injiziert, wodurch der Kühlkanal 18 ausgebildet wird. Das Fluid und/oder Projektil umläuft bzw. umströmt während des Injizierens den Formkern 34 in den spiralförmig angeordneten Vertiefungen 41 des Außenteils 40, wodurch der die Gewebelage 26 spiralförmig umlaufende Kühlkanal 18 ausgebildet wird. Dabei können bereits die Anschraub- und/ Verschlusshülsen 22 mit dem Kunststoff umspritzt sein, so dass die Schnittstellen 20a, 20b ohne weiteren Arbeitsschritt ausgebildet werden können. Das injizierte Fluid kann zum Beispiel Gas, Öl und/oder Wasser umfassen. Durch das Injizieren wird ein noch schmelzförmiger Mittelbereich 44 des mit Kunststoff gefüllten Außenbereichs 42 der Kavität 38 vorgedrückt. Der Mittelbereich 44 kann so als eine Art plastische Seele aus fließfähigem Kunststoff erachtet werden. Die Wandung 19 des Gehäusemantels 10 wird dabei verdichtet, die restliche Kavität 38 wird ausgeformt und der Kühlkanal 18 wird ausgebildet. Dabei entsteht eine weitere Stabilisierung der Wandung 19 und Lunker bzw. Einfallstellen in dem spritzgegossenen Kunststoff können ausgeglichen werden.

Da für den umlaufenden Kühlkanal 18 Schnittstellen 20a, 20b in Form eines Einlasses und eines Auslasses für Kühlfluid erforderlich sein können, kann die Injektion des Fluids und/oder des Projektils von den sich gegenüberliegenden Stirnflächen 14, 16 her erfolgen. Durch Injektion von zwei Seiten her kann ferner eine doppelte Kanallänge in einem Prozessschritt ausgebildet werden.

Durch die Injektion eines kühlen Fluids und/oder Projektils kann sich der Kunststoff schnell verfestigen und der Gehäusemantel 10 kann nach kurzer Zeit, beispielsweise nach wenigen Sekunden, entformt werden. Somit kann Kühlzeit und damit Zykluszeit zur Fertigstellung des Gehäusemantels 10 eingespart werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Gehäusemantel (10) für eine elektrische Maschine (12),
wobei der Gehäusemantel (10) topfförmig und aus Kunststoff ausgebildet ist, wobei an einem Außenumfang (15) des Gehäusemantels (10) wenigstens ein Kühlkanal (18) zur Fluidkühlung der elektrischen Maschine (12) in dem Gehäusemantel (10) ausgebildet ist,
**dadurch gekennzeichnet, dass**
zwischen einer Innenfläche (24) des Gehäusemantels (10) und dem Kühlkanal (18) eine Gewebelage (26) in den Gehäusemantel (10) integriert ist, welche den Gehäusemantel (10) durchzieht,
dass an einer Stirnfläche (14) des Gehäusemantels (10) ein Flansch (30) ausgebildet ist, in welchen entlang eines Umfangs eine Mehrzahl von Befestigungsausnehmungen (32) zum Befestigen des Gehäusemantels (10) ausgebildet ist,
dass sich die Gewebelage (26) radial zumindest teilweise durch den Flansch (30) erstreckt, und dass sich die Befestigungsausnehmungen (32) in axialer Richtung des Gehäusemantels (10) durch die Gewebelage (26) erstrecken.

2. Gehäusemantel (10) gemäß Anspruch 1,
wobei die Gewebelage (26) zumindest teilweise von dem Kunststoff des Gehäusemantels (10) umspritzt ist.

3. Gehäusemantel (10) gemäß Anspruch 1 oder 2,
wobei die Gewebelage (26) ein Metallgewebe, ein Kohlefasergewebe und/oder ein Glasfasergewebe aufweist.

4. Gehäusemantel (10) gemäß einem der voranstehenden Ansprüche,
wobei der Kunststoff ein faserverstärkter Kunststoff ist.

5. Gehäusemantel (10) gemäß einem der voranstehenden Ansprüche,
wobei eine Maschenweite der Gewebelage (26) kleiner als 5,0 mm ist; und/oder wobei eine Dicke der Gewebelage (26) wenigstens 0,3 mm beträgt.

6. Gehäusemantel (10) gemäß einem der voranstehenden Ansprüche,
wobei der Kühlkanal (18) in dem Gehäusemantel (10) spiralförmig entlang eines Außenumfangs (15) umlaufend ausgebildet ist.

7. Elektrische Maschine (12) mit einem Gehäusemantel (10) nach einem der voranstehenden Ansprüche.

## Claims

1. Housing jacket (10) for an electrical machine (12),
the housing jacket (10) being formed in the shape of a pot and made of plastic,
at least one cooling channel (18) for the fluid cooling of the electrical machine (12) in the housing jacket (10) being formed on an outer circumference (15) of the housing jacket (10), **characterized in that**
between an inner surface (24) of the housing jacket (10) and the cooling channel (18), a fabric layer (26), which passes through the housing jacket (10), is integrated into the housing jacket (10),
**in that** a flange (30), in which a plurality of fixing recesses (32) for fixing the housing jacket (10) is formed along a circumference, is formed on an end face (14) of the housing jacket (10),
**in that** the fabric layer (26) extends radially at least partly through the flange (30), and **in that** the fixing recesses (32) extend through the fabric layer (26) in the axial direction of the housing jacket (10).

2. Housing jacket (10) according to Claim 1,
wherein the fabric layer (26) is at least partly encapsulated by the plastic of the housing jacket (10) .

3. Housing jacket (10) according to Claim 1 or 2,
wherein the fabric layer (26) has a metal fabric, a carbon fibre fabric and/or a glass fibre fabric.

4. Housing jacket (10) according to one of the preceding claims,
wherein the plastic is a fibre-reinforced plastic.

5. Housing jacket (10) according to one of the preceding claims,
wherein a mesh size of the fabric layer (26) is less than 5.0 mm, and/or wherein a thickness of the fabric layer (26) is at least 0.3 mm.

6. Housing jacket (10) according to one of the preceding claims,
wherein the cooling channel (18) is formed helically in the housing jacket (10), circumferentially along an outer circumference (15) of the latter.

7. Electrical machine (12) having a housing jacket (10) according to one of the preceding claims.

## Revendications

1. Chemise de carter (10) pour une machine électrique (12),
dans laquelle la chemise de carter (10) est réalisée en forme de pot et en matière plastique,
dans laquelle au moins un canal de refroidissement (18) est formé dans une périphérie extérieure (15) de la chemise de carter (10) pour le refroidissement par un fluide de la machine électrique (12) dans la chemise de carter (10),
**caractérisée en ce que**
une couche de tissu (26) est intégrée dans la chemise de carter (10) entre une face intérieure (24) de la chemise de carter (10) et le canal de refroidissement (18), et traverse la chemise de carter (10),
une bride (30) est formée sur une face frontale (14) de la chemise de carter (10), dans laquelle une multiplicité d'évidements de fixation (32) sont formés le long d'une périphérie pour la fixation de la chemise de carter (10), la couche de tissu (26) s'étend radialement au moins en partie à travers la bride (30), et
les évidements de fixation (32) s'étendent dans la direction axiale de la chemise de carter (10) à travers la couche de tissu (26).

2. Chemise de carter (10) selon la revendication 1, dans laquelle la couche de tissu (26) est enrobée au moins en partie par la matière plastique de la chemise de carter (10).

3. Chemise de carter (10) selon une revendication 1 ou 2, dans laquelle la couche de tissu (26) présente un tissu métallique, un tissu de fibres de carbone et/ou un tissu de fibres de verre.

4. Chemise de carter (10) selon l'une quelconque des revendications précédentes, dans lequel la matière plastique est une matière plastique renforcée par des fibres.

5. Chemise de carter (10) selon l'une quelconque des revendications précédentes, dans laquelle une largeur de maille de la couche de tissu (26) est inférieure à 5,0 mm; et/ou dans laquelle une épaisseur de la couche de tissu (26) vaut au moins 0,3 mm.

6. Chemise de carter (10) selon l'une quelconque des revendications précédentes, dans laquelle le canal de refroidissement (18) est réalisé dans la chemise de carter (10) en forme de spirale s'étendant le long d'une périphérie extérieure (15).

7. Machine électrique (12) dotée d'une chemise de carter (10) selon l'une quelconque des revendications précédentes.
